# EUROPÄISCHE PATENTSCHRIFT

(11) **EP 0 846 877 B1**
(45) Veröffentlichungstag und Bekanntmachung des Hinweises auf die Patenterteilung: **29.03.2000**
(21) Anmeldenummer: 97120248.6
(22) Anmeldetag: 19.11.1997
(51) Int. Cl.: F16B 7/14

(54) **Positionierklemme sowie Verfahren zu ihrer Herstellung**
Clamping device and method of fabrication
Dispositif de fixation et procédé de fabrication

(30) Priorität: 09.12.1996 DE 19650985
(43) Veröffentlichungstag der Anmeldung: 10.06.1998
(73) Patentinhaber: Hans Oetiker AG Maschinen- und Apparatefabrik, 8812 Horgen (CH)
(72) Erfinder: Allert, Kurt, 78727 Oberndorf A.N. (DE)
(74) Vertreter: Grosse, Rainer, Dipl.-Ing.

(56) Entgegenhaltungen:
- US-A- 1 661 868
- US-A- 2 842 387
- US-A- 5 180 266

## Beschreibung

Die Erfindung betrifft eine Positionierklemme mit einem ringförmigen Grundkörper und mindestens einem, dem Grundkörper zugeordneten Radialklemmittel.

Positionierklemmen der eingangs genannten Art sind bekannt. Sie werden als Drehteil in Ringform gefertigt. In eine den Ring radial durchgreifende Gewindebohrung ist ein Radialklemmittel in Form einer Gewindeschraube eingeschraubt. Durch Anziehen der Gewindeschraube läßt sich eine radiale Spannkraft aufbringen, beispielsweise um die Positionierklemme auf einer Welle festzulegen oder um ein Bauteil mit einer Welle radial zu verspannen. Die bekannten, aus dem Vollen gedrehten Positionierklemmen sind aufwendig in der Herstellung und erfordern einen hohen Materialeinsatz. Dies führt zu hohen Kosten.

Eine Positionierklemme nach dem Oberbegriff des Anspruchs 1 ist aus US A 1 661 868 bekannt. Diese bekannte Positionierklemme dient zum Fixieren zweier teleskopisch ineinander geschobener Rohre aneinander, wobei das Radialklemmittel durch eine Bohrung des äußeren Rohrs hindurch gegen das innere drückt, und die dem Radialklemmittel gegenüberliegende Mantelwand gegen das äußere Rohr drückt. Der Durchmesser des Durchbruchs der Positionierklemme entspricht im wesentlichen dem des inneren Rohrs, und ein den Durchbruch umgebender horizontaler Randbereich liegt an der Spitze des äußeren Rohrs auf. Diese bekannte Positionierklemme ist nicht zur Verwendung an einem einzelnen Rohr oder Stab geeignet, da sie beim Festspannen des Radialklemmittels verkantet.

Eine weitere Positionierklemme ist aus US A 2 842 387 bekannt. Auch diese Positionierklemme dient zum Fixieren von teleskopisch ineinandergesteckten Rohren aneinander und hat einen Grundkörper, dessen Form im wesentlichen der Form des Grundkörpers der vorgenannten Klemme entspricht und die gleichen Nachteile aufweist.

Der Erfindung liegt die Aufgabe zugrunde, eine Positionierklemme zu schaffen, die einfach und preiswert herstellbar ist, eine hohe Festigkeit aufweist und nicht auf die Anwendung zum Feststellen teleskopisch verschiebbarer Rohre aneinander beschränkt ist.

Diese Aufgabe wird gelöst durch eine Positionierklemme nach Anspruch 1. Durch die Herstellung der Positionierklemme aus einer einfachen, plattenförmigen Platine, beispielsweise einer Blechplatine, ist es durch den erfindungsgemäßen Tiefziehvorgang möglich, einen ringförmigen Grundkörper zu formen, der ein Leichtbauteil bildet und dennoch mindestens die gleiche Festigkeit wie die aus dem Stand der Technik bekannte, als Drehteil ausgebildete Positionierklemme besitzt. Um trotz der relativ dünnen Wandstärke der Mantelwand der erfindungsgemäßen Positionierklemme hinreichende Radialkräfte zum Spannen aufbringen zu können, ist vorgesehen, beim Tiefziehen eine Tasche mitauszubilden, die der Aufnahme des Radialklemmittels dient. Der Aufnahmeraum der Tasche ist somit geeignet, beispielsweise ein Innengewinde-Einlegeteil aufzunehmen, in das eine Gewinde-Klemmschraube eingeschraubt ist. Das Einlegeteil hat eine hinreichende Wandstärke, um ein entsprechend langes Innengewinde ausbilden zu können, so daß mit der darin eingeschraubten Gewinde-Klemmschraube hohe Radialklemmkräfte aufgebracht werden können, ohne daß es zu Beschädigungen der Gewindegänge kommt. Die Fertigung der Positionierklemme erfolgt vorzugsweise mit einem Folgeverbundwerkzeug, das heißt, es werden beispielsweise zwei Vorzieh- und ein Nachziehvorgang durchgeführt. Anschließend erfolgt ein Ausschlagen, um eine Öffnung in dem so gebildeten Kopf zu erzeugen. Dies erfolgt durch teilweises Entfernen des Napfbodens. Übrig bleibt dann der Grundkörper, der eine ringförmige Mantelwand bildet. Die Mantelwand ist im Bereich der Tasche entsprechend der gewünschten Taschenform radial nach außen aufgeweitet, wobei am Umfang der Positionierklemme zumindest diese eine, jedoch auch mehrere, in Umfangsrichtung voneinander beabstandete Taschen zur Aufnahme eines Radialklemmittels ausgebildet sein können. Sofern die Positionierklemme im Einsatz eine Drehbewegung ausführt, beispielsweise weil sie sich auf einer rotierenden Welle befindet, kann es vorteilhaft sein, zum Massenausgleich zwei einander diametral gegenüberliegende Taschen mit entsprechenden Radialklemmitteln vorzusehen. Hierdurch ist nicht nur eine gleichmäßige Massenverteilung realisiert, sondern auch ein weiteres Radialklemmittel vorhanden, so daß insgesamt über den Umfang an mehreren Punkten gespannt werden kann. Neben der Ausbildung zweier, einander diametral gegenüberliegenden Taschen ist auch beispielsweise eine Ausgestaltung mit drei, zueinander um 120° versetzt liegenden Taschen oder noch mehr Taschen möglich.

Nach einer Weiterbildung der Erfindung ist ein radialer, vom Flansch des Tiefziehteils gebildeter Versteifungsrand vorgesehen. Dieser befindet sich hinsichtlich der Mantelwand an einem ihrer Stirnseitenränder. Der Versteifungsrand stellt somit den "Rest" der nicht oder nur wenig in diesem Bereich verformten Platine dar.

Ferner ist es vorteilhaft, wenn der Versteifungsrand eine Dicke aufweist, die gleich groß oder kleiner ist als die Dicke der bei dem Tiefziehvorgang verwendeten Platine. Wird für die Herstellung der Positionierklemme ein Stahlblech verwendet, so ist die Dicke des Versteifungsrands etwa so groß wie die Blechstärke des Stahlblechs. Für bestimmte Anwendungszwecke ist es auch denkbar, als Werkstoff für die Positionierklemmen nicht Metall, sondern beispielsweise Kunststoff zu verwenden, da Kunststoff für einen Tiefziehvorgang ebenfalls geeignet ist. Unabhängig vom Material wird der Tiefziehvorgang vorzugsweise als Kaltverformungsvorgang durchgeführt. Alternativ ist es jedoch auch möglich, die Platine vor dem Umformvorgang zu erwärmen. Im Bereich des Versteifungsrands ist der Innenseitenrand des Grundkörpers, also der dort liegende Stirnseitenrand der Mantelwand, trichterförmig gestaltet, das heißt, er erweitert sich in axialer Richtung radial nach außen. Diese Erweiterung resultiert im wesentlichen aus dem Tiefziehvorgang und stammt vom Radius der Ausnehmung einer Matritze, in die mittels eines Stempels die Platine hineingedrückt wird.

Die Tasche nimmt vorzugsweise ein dem Radialklemmmittel angehörendes Innengewinde-Einlegeteil verdrehsicher auf. Durch diese Verdrehsicherung ist sichergestellt, daß beim Festziehen des Radialklemmittels sich das Einlegeteil nicht mitdreht. Die Verdrehsicherung wird vorzugsweise dadurch geschaffen, daß das Einlegeteil eine Mehrkantkontur aufweist, die mit nur geringem Spiel von der Tasche aufgenommen wird.

Insbesondere ist vorgesehen, daß das Innengewinde-Einlegeteil eine Gewindemutter ist.

Nach einer Weiterbildung der Erfindung ist die Tasche von einem etwa U-förmigen Bereich der Mantelwand des Grundkörpers gebildet. Dieser U-förmige Bereich weist einen Steg sowie zwei daran angrenzende Schenkel auf. Der Steg wird von einem Durchbruch durchsetzt, der von einer Gewinde-Klemmschraube durchgriffen wird, die in das Innengewinde-Einlegeteil eingeschraubt ist.

Wenn der Durchbruch kleiner als die Abmessung des Innengewinde-Einlegeteils und kleiner als ein sich an der Außenseite des Stegs befindlicher Kopf der Gewinde-Klemmschraube ist, wird das Radialklemmittel unverlierbar an dem Grundkörper gehalten. Dies ermöglicht eine schnelle Montage mit nur wenigen Handgriffen.

Insbesondere kann vorgesehen sein, daß vom Steg und den beiden Schenkeln einstückig ein Boden ausgeht. Dieser Boden ist ein "Überbleibsel" der von der Stirnseite des Stempels in die Ausnehmung der Matritze hineingedrückten Platine, also von dem bereits erwähnten Napfboden. Durch den Boden wird die Positionierklemme insgesamt mechanisch versteift, und überdies ist durch den Boden ein definierter Anschlag für das Einlegen des Radialklemmittels geschaffen. Ferner bildet der Boden zusätzlich eine Verdrehsicherung für das Innengewinde-Einlegeteil.

Die Erfindung betrifft ferner ein Verfahren zur Herstellung einer Positionierklemme, wobei eine Platine, vorzugsweise in Form einer Platte oder eines Blechs, tiefgezogen und anschließend zur ringförmigen Ausbildung ausgeschlagen wird. Unter "ausschlagen" wird das zumindest bereichsweise erfolgende Heraustrennen des beim Tiefziehvorgang gebildeten "Gefäßbodens" verstanden, so daß die verbleibende Gefäßwandung die Mantelwand der Positionierklemme bildet.

Vorzugsweise wird während des Tiefziehvorgangs gleichzeitig die Mantelwand in einem Bereich radial nach außen verformt, so daß eine Tasche zur Aufnahme eines Radialklemmittels entsteht.

Die Zeichnungen veranschaulichen die Erfindung anhand eines Ausführungsbeispiels und zwar zeigt:
- Figur 1: eine Draufsicht auf eine Positionierklemme,
- Figur 2: eine Stirnansicht auf eine Tasche der Positionierklemme,

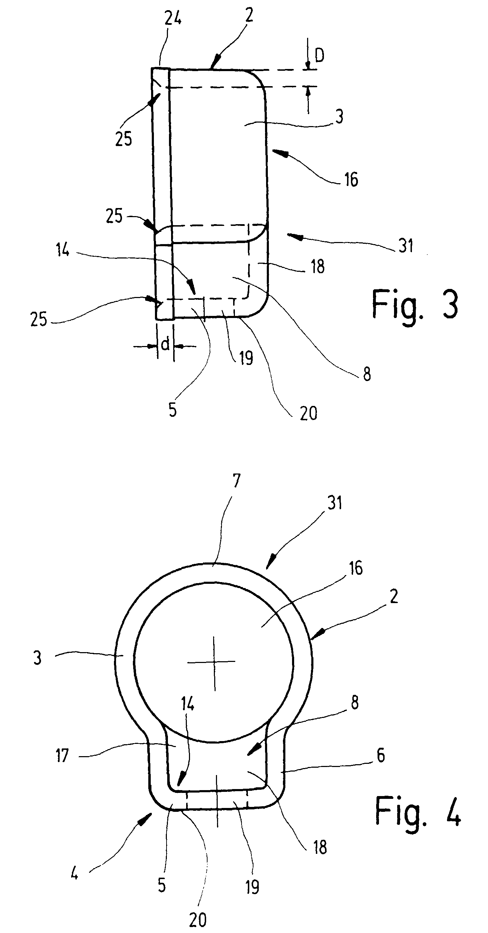

- Figur 3: die Positionierklemme der Figur 1 in Seitenansicht mit entferntem Radialklemmittel,
- Figur 4: die Draufsicht der Figur 1, jedoch ebenfalls mit entferntem Radialklemmittel,
- Figur 5: ein zum Radialklemmittel gehörendes Innengewinde-Einlegeteil in Form einer Gewindemutter,
- Figur 6: eine Gewinde-Klemmschraube mit konischem Kopf und
- Figur 7: eine Gewinde-Klemmschraube mit Zylinderkopf.

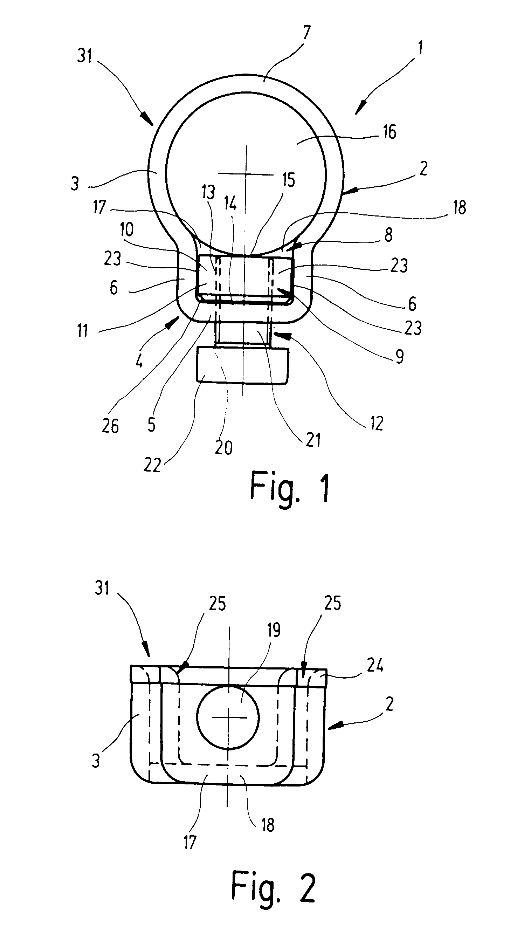

Die Figur 1 zeigt eine Positionierklemme 1, die durch Kaltverformung als Tiefziehteil 31 hergestellt ist. Sie weist einen ringförmigen Grundkörper 2 auf, der eine Mantelwand 3 bildet. Ein Bereich 4 der Mantelwand 3 ist U-förmig radial nach außen erweitert. Die U-Form wird von einem Steg 5 sowie zwei einstückig daran angrenzenden Schenkeln 6 gebildet. Der übrige Bereich 7 der Mantelwand 3 weist eine Teilkreiskontur auf.

Der U-förmige Bereich 4 bildet eine Tasche 8 aus, in die ein Radialklemmittel 9 eingelegt ist. Dies besteht aus einem Innengewinde-Einlegeteil 10 in Form einer Gewindemutter 11 sowie aus einer Gewinde-Klemmschraube 12, die in ein Innengewinde 13 der Gewindemutter 11 eingeschraubt ist. Die Anordnung ist so getroffen, daß sich die Gewindemutter 11 an der Innenseite 14 des Stegs 5 abstützt. Die dieser Abstützfläche gegenüberliegende Seite 15 der Gewindemutter 11 grenzt an einen Durchbruch 16 an, der größtenteils von der teilkreisförmig verlaufenden Mantelwand 3 umgeben ist. Dieser Durchbruch 16 wird bei der Herstellung der Positionierklemme 1 durch nach dem Tiefziehen erfolgendes Ausschlagen gebildet.

Der im Bereich der Tasche 8 liegende, an den Durchbruch 16 angrenzende Bereich 17 bildet einen Boden 18, der einstückig mit den Rändern des Stegs 5 sowie der beiden Schenkel 6 verbunden ist. Der Steg 5 wird von einem Durchbruch 19 durchsetzt, der vorzugsweise ebenfalls durch Ausschlagen erzeugt wird. Er ist derart ausgebildet und angeordnet, daß er mit dem Innengewinde 13 der Gewindemutter 11 fluchtet, so daß -von einer Außenseite 20 des Stegs 5 her- die Gewinde-Klemmschraube 12 dem Grundkörper 2 zugeordnet werden kann, wobei ein Gewindeschaft 21 der Gewinde-Klemmschraube 12 den Durchbruch 19 durchsetzt und in das Innengewinde 13 der Gewindemutter 11 eingeschraubt ist. Die Gewinde-Klemmschraube 12 besitzt einen Kopf 22, dessen Durchmesser größer als der Durchmesser des Durchbruchs 19 ist. Das Innengewinde-Einlegeteil 10 weist eine Mehrkantkontur auf, beispielsweise aufgrund der Ausbildung als Vierkant-Gewindemutter, so daß drei der vier Mutterseiten 23 in Gegenüberlage zu den Innenseiten der Schenkel 6 und der Innenseite des Bodens 18 treten. Hierdurch wird das Innengewinde-Einlegeteil 10 verdrehsicher in der Tasche 8 aufgenommen.

Der Grundkörper 2 weist einen radial verlaufenden Versteifungsrand 24 auf, der umlaufend ausgebildet ist. Er resultiert aus dem beim Tiefziehen gebildeten Flansch des Tiefziehteils, also dem Bereich der Platine, der vom Stempel nicht in die Ausnehmung der Matritze eingepreßt wird. Dieser Versteifungsrand 24 verbessert die mechanische Festigkeit des gesamten Bauteils. Die Dicke d des Versteifungsrands entspricht etwa der Dicke D der beim Tiefziehvorgang verwendeten Platine. Die Dicke D entspricht etwa der Wandstärke der Mantelwand 3.

Im Bereich des Versteifungsrands 24 ist die Innenseite 25 der Mantelwand 3 in axialer Richtung radial nach außen sich erweiternd ausgebildet. Es liegt somit eine konvexe Fase vor.

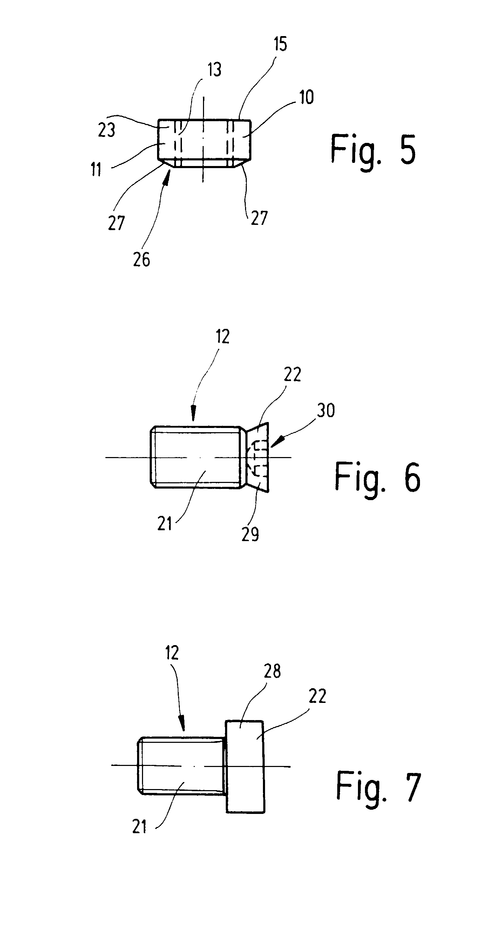

Die Figur 5 zeigt das bereits erwähnte Innengewinde-Einlegeteil 10, das als vierseitige Gewindemutter 11 ausgebildet und von dem Innengewinde 13 durchsetzt ist. Die der Innenseite 14 des Grundkörpers 2 zugeordnete Stirnseite 26 der Gewindemutter 11 ist mit randseitigen Abflachungen 27 versehen, so daß eine gute Anlage an der Innenseite 14 des Stegs 5 und auch im Eckbereich des Stegs 5 zu den Schenkeln 6 ermöglicht ist. Die Figur 7 zeigt die bereits aus der Figur 1 hervorgehende Gewinde-Klemmschraube 12, die den Gewindeschaft 21 und den Kopf 22 aufweist, der als Zylinderkopf 28 ausgebildet ist. Im Zylinderkopf 28 sind entsprechende, nicht dargestellte Eingriffsmittel für ein Drehwerkzeug, beispielsweise einen Schraubendreher, vorgesehen.

Die Figur 6 zeigt ein weiteres Ausführungsbeispiel einer Gewinde-Klemmschraube 12, deren Gewindeschaft 21 an einen Kopf 22 angrenzt, der als Konuskopf 29 ausgebildet ist. Der größte Konusdurchmesser ist größer als der Durchmesser des Durchbruchs 19, so daß die bereits erwähnte Unverlierbarkeit des Radialklemmittels 9 gewährleistet ist. Der Konuskopf 29 ist mit einem Innenmehrkant 30 für den Eingriff eines entsprechenden Eindrehwerkzeugs ausgestattet.

## Patentansprüche

1. Positionierklemme (1) mit einem ringförmigen Grundkörper (2) und mindestens einem, dem Grundkörper (2) zugeordneten Radialklemmittel, wobei der Grundkörper (2) als Tiefziehteil (31) ausgebildet ist und eine Mantelwand (3), einen Durchbruch (16) sowie eine beim Tiefziehen mitausgebildete Tasche (8) zur zumindest teilweisen Aufnahme des Radialklemmittels (9) aufweist, **dadurch gekennzeichnet**, daß ein radialer Versteifungsrand (24) von einem beim Tiefziehen erzeugten Flansch des Tiefziehteils (31) gebildet ist, und daß die Innenseite der Mantelwand (3) mit dem Durchbruch (16) fluchtet.

2. Positionierklemme nach Anspruch 1, **dadurch gekennzeichnet**, daß der Versteifungsrand (24) eine Dicke (d) aufweist, die kleiner als oder gleich groß wie die Dicke (D) der bei dem Tiefziehvorgang verwendeten Platine ist.

3. Positionierklemme nach einem der vorhergehenden Ansprüche, **dadurch gekennzeichnet**, daß die Innenseite (25) des Grundkörpers (2) im Bereich des Versteifungsrands (24) in axialer Richtung radial nach außen sich erweiternd ausgebildet ist.

4. Positionierklemme nach einem der vorhergehenden Ansprüche, **dadurch gekennzeichnet,** daß die Tasche (8) ein dem Radialklemmittel (9) angehörendes Innengewinde-Einlegeteil (10) verdrehsicher aufnimmt.

5. Positionierklemme nach einem der vorhergehenden Ansprüche, **dadurch gekennzeichnet**, daß das Innengewinde-Einlegeteil (10) eine Gewindemutter (11) ist.

6. Positionierklemme nach einem der vorhergehenden Ansprüche 4-5, **dadurch gekennzeichnet,** daß die Tasche (8) von einem etwa U-förmigen Bereich (4) einer Mantelwand (3) des Grundkörpers (2) gebildet ist und einen Steg (5) sowie zwei daran angrenzende Schenkel (6) aufweist, und daß der Steg (5) von einem Durchbruch (19) durchsetzt ist, der von einer Gewinde-Klemmschraube (12) durchgriffen wird, die in das Innengewinde-Einlegeteil (10) eingeschraubt ist.

7. Positionierklemme nach Anspruch 6, **dadurch gekennzeichnet,** daß der Durchbruch (19) kleiner als die Abmessung des Innengewinde-Einlegeteils (10) und kleiner als ein sich an der Außenseite (20) des Stegs (5) befindlicher Kopf (22) der Gewinde-Klemmschraube (12) ist.

8. Positionierklemme nach einem der vorhergehenden Ansprüche 6-7, **dadurch gekennzeichnet**, daß vom Steg (5) und den beiden Schenkeln (6) einstückig ein Boden (18) ausgeht.

9. Positionierklemme nach Anspruch 8, **dadurch gekennzeichnet**, daß der Boden (18) und/oder die Schenkel (6) der Verdrehsicherung des Innengewinde-Einlegeteils (10) dient beziehungsweise dienen.

10. Positionierklemme nach einem der vorhergehenden Ansprüche 8-9, **dadurch gekennzeichnet,** daß der Boden (18) an dem dem Versteifungsrand (24) gegenüberliegenden Stirnseitenrand der Mantelwand (3) liegt.

11. Verfahren zum Herstellen einer Positionierklemme, bei dem eine Platine tiefgezogen wird, um eine Mantelwand zu bilden und anschließend zur ringförmigen Ausbildung ausgeschlagen wird, **dadurch gekennzeichnet**, daß beim Tiefziehen ein Flansch erzeugt wird, der einen radial verlaufenden Versteifungsrand (24) der Positionierklemme bildet, und daß die Platine so ausgeschlagen wird, daß der gebildete Durchbruch (16) mit der Innenseite der Mantelwand fluchtet.

## Claims

1. A positioning clamp (1) comprising an annular body (2) and at least one radial clamping means associated with the body (2), wherein the body (2) is formed as a deep-drawn part (31) and comprises an outer wall (3), an opening (16) and a recess (8) which is jointly formed during deep drawing for at least partially receiving the radial clamping means (9), characterised in that a radial reinforcing edge (24) is formed by a flange of the deep-drawn part (31), the flange being produced during deep drawing, and in that the inner surface of the outer wall (3) is aligned with the opening (16).

2. A positioning clamp according to claim 1, characterised in that the reinforcing edge (24) has a thickness (d) smaller than or equal to the thickness (D) of the blank used during the deep-drawing process.

3. A positioning clamp according to either one of the preceding claims, characterised in that the inner surface (25) of the body (2) widens radially outwards in the axial direction in the region of the reinforcing edge (24).

4. A positioning clamp according to any one of the preceding claims, characterised in that the recess (8) receives an internally-threaded insert (10), forming part of the radial clamping means (9), in a torsion-resistant manner.

5. A positioning clamp according to any one of the preceding claims, characterised in that the internally-threaded insert (10) is a threaded nut (11).

6. A positioning clamp according to either one of the preceding claims 4 and 5, characterised in that the recess (8) is formed by a substantially U-shaped region (4) of an outer wall (3) of the body (2) and comprises a crosspiece (5) and two arms (6) adjoining the latter, and in that the crosspiece (5) is pierced by an opening (19), through which extends a threaded clamping screw (12) which is screwed into the internally-threaded insert (10).

7. A positioning clamp according to claim 6, characterised in that the opening (19) is smaller than the dimension of the internally-threaded insert (10) and smaller than a head (22) of the threaded clamping screw (12) on the outside (20) of the crosspiece (5).

8. A positioning clamp according to either one of the preceding claims 6 and 7, characterised in that a base (18) extends in one piece from the crosspiece (5) and the two arms (6).

9. A positioning clamp according to claim 8, characterised in that the base (18) and/or the arms (6) serve(s) to produce the torsion-resistant mounting of the internally-threaded insert (10).

10. A positioning clamp according to either one of the preceding claims 8 and 9, characterised in that the base (18) lies at the front edge of the outer wall (3) opposite the reinforcing edge (24).

11. A method of manufacturing a positioning clamp, wherein a blank is deep-drawn in order to form an outer wall and is then punched out into an annular shape, characterised in that a flange is produced during deep drawing and forms a radially extending reinforcing edge (24) of the positioning clamp, and in that the blank is punched out so that the opening (16) formed is aligned with the inner surface of the outer wall.

## Revendications

1. Pince de positionnement (1), avec un corps de base (2) annulaire et au moins un moyen de serrage radial associé au corps de base (2), le corps de base (2) étant réalisé sous forme de pièce emboutie (31) et présentant une paroi d'enveloppe (3), un ajour (16) ainsi qu'une poche (8) conjointement formée lors de l'emboutissage et destinée à recevoir au moins partiellement le moyen de serrage radial (9), **caractérisée** en ce qu'un bord de renforcement radial (24) est formé par un collet de la pièce emboutie (31) qui est produit lors de l'emboutissage, et en ce que le côté intérieur de la paroi d'enveloppe (3) est aligné avec l'ajour (16).

2. Pince de positionnement selon la revendication 1, **caractérisée** en ce que le bord de renforcement (24) présente une épaisseur (d) qui est inférieure ou égale à l'épaisseur (D) de l'ébauche utilisée pour l'emboutissage.

3. Pince de positionnement selon une des revendications précédentes, **caractérisée** en ce que le côté intérieur (25) du corps de base (2) est réalisé, dans la région du bord de renforcement (24) en direction axiale, en s'élargissant radialement vers l'extérieur.

4. Pince de positionnement selon une des revendications précédentes, **caractérisée** en ce que la poche (8) reçoit avec blocage en rotation, une pièce d'insertion (10) à filetage intérieur faisant partie du moyen de serrage radial (9).

5. Pince de positionnement selon une des revendications précédentes, **caractérisée** en ce que la pièce d'insertion (10) à filetage intérieur est un écrou fileté (11).

6. Pince de positionnement selon la revendication 4 ou 5, **caractérisée** en ce que la poche (8) est formée par une région (4) approximativement en forme de U d'une paroi d'enveloppe (3) du corps de base (2), et présente un dos (5) de U ainsi que deux branches attenantes (6), et en ce que le dos (5) de U est traversé par un ajour (19), à travers lequel s'engage une vis de serrage (12) qui est vissée dans la pièce d'insertion (10) à filetage intérieur.

7. Pince de positionnement selon la revendication 6, **caractérisée** en ce que l'ajour (19) est d'une taille inférieure à la pièce d'insertion (10) à filetage intérieur, et inférieure à une tête (22) de la vis de serrage (12) qui s'applique contre le côté extérieur (20) du dos (5) de U.

8. Pince de positionnement selon la revendication 6 ou 7, **caractérisée** en ce qu'un fond (18) part d'un seul tenant du dos (5) de U et des deux branches (6).

9. Pince de positionnement selon la revendication 8, **caractérisée** en ce que le fond (18) et/ou les branches (6) sert ou servent au blocage en rotation de la pièce d'insertion (10) à filetage intérieur.

10. Pince de positionnement selon la revendication 8 ou 9, **caractérisée** en ce que le fond (18) s'applique contre le bord latéral frontal de la paroi d'enveloppe (3) qui est opposé au bord de renforcement (24).

11. Procédé de fabrication d'une pince de positionnement, selon lequel une ébauche est emboutie afin de former une paroi d'enveloppe, puis est découpée en une forme annulaire, **caractérisé** en ce qu'on produit lors de l'emboutissage un collet qui forme un bord de renforcement (24) de la pince de positionnement, bord qui s'étend radialement, et en ce que l'ébauche est découpée de telle sorte que l'ajour (16) formé est aligné avec le côté intérieur de la paroi d'enveloppe.
